# EUROPEAN PATENT SPECIFICATION

(11) **EP 2 941 068 B1**
(45) Date of publication and mention of the grant of the patent: **01.08.2018**
(21) Application number: 15154492.1
(22) Date of filing: 10.02.2015
(51) Int. Cl.: H04W 64/00, H04W 16/28, H04W 84/12

(54) **DEVICE LOCATIONING USING WIRELESS COMMUNICATION**
VORRICHTUNGSPOSITIONSBESTIMMUNG MIT DRAHTLOSER KOMMUNIKATION
LOCALISATION D'UN DISPOSITIF UTILISANT LA COMMUNICATION SANS FIL

(30) Priority: 14.03.2014 US 201461953120 P; 30.05.2014 US 201414291853
(43) Date of publication of application: 04.11.2015
(73) Proprietor: Broadcom Corporation, Irvine, CA 92617 (US)
(72) Inventor: Rajakarunanayake, Yasantha, San Ramon, California 94582 (US); Erceg, Vinko, Cardiff, California 92007 (US)
(74) Representative: Bosch Jehle Patentanwaltsgesellschaft mbH

(56) References cited:
- EP-A2- 2 663 100
- US-A1- 2010 240 392
- US-A1- 2010 302 102
- US-A1- 2014 355 465
- NICULESCU D ET AL: "VOR BASE STATIONS FOR INDOOR 802.11 POSITIONING", PROCEEDING MOBICOM '04 PROCEEDINGS OF THE 10TH ANNUAL INTERNATIONAL CONFERENCE ON MOBILE COMPUTING AND NETWORKING,, vol. CONF. 10, 26 September 2004 (2004-09-26), pages 58-69, XP001235023, DOI: 10.1145/1023720.1023727 ISBN: 978-1-58113-868-9
- KENSAKU KAWAUCHI ET AL: "Directional Beaconing: A Robust WiFi Positioning Method Using Angle-of-Emission Information", 7 May 2009 (2009-05-07), LOCATION AND CONTEXT AWARENESS, SPRINGER BERLIN HEIDELBERG, BERLIN, HEIDELBERG, PAGE(S) 103 - 119, XP019117867, ISBN: 978-3-642-01720-9 * the whole document *

## Description

### BACKGROUND

### Field of Disclosure

The present disclosure relates generally to locating a mobile communication device within a communication network.

### Related Art

A cellular network is a wireless network distributed over a geographic area that is divided into cells. Each cell is served by at least one fixed-location transceiver, known as a base station. The base station is responsible for handling traffic and signaling between communication devices and a network switching subsystem. When joined together, the cells provide communication over a wide geographic area. This enables a mobile communication device to communicate with another mobile communication device, with a base station, and/or with another communication device within the cellular network.

The mobile communication device represents a device that can initiate and receive communication over a radio link while moving around a wide geographic area. Knowing a physical location, or simply a location, of the mobile communication device within the cellular network can be beneficial to a user of the mobile communication device, as well as an operator of the cellular network. This allows the mobile communication device and/or the cellular network to provide location-based services (LBS) to the user. LBS represent various services that are provided to the users that depend upon the physical location of the mobile communication device. These services can include, for example, recommending social events in a city, requesting the nearest business or service such as an automated teller machine (ATM) or restaurant, turn by turn navigation to an address, locating people on a map, location-based mobile advertising, or contextualizing learning and research as well as many other services.

The mobile communication device communicates over the cellular network by sending and receiving various communication signals. Beamforming represents a technique that can assist in determining the location of the mobile communication device within the cellular network using communication signals. Beamforming can be performed either explicitly or implicitly. In explicit beamforming, the mobile communication device receives information from the cellular network which allows the mobile communication device to augment its communication signals in subsequent transmissions. In implicit beamforming, the mobile communication device provides communication signals without any information from the cellular network. In both explicit and implicit beamforming, the location of the mobile communication device can be determined from characteristics of communication signals received from the mobile communication device.

The best prior art document is US2010/240392 (Gerstenberger et al; Pub. 23.09.2010). From this document is known angle of attack downlink signalling, where signaling is required over the RRC DL interface of LTE, where an angle of arrival is measured, where an eNodeB coordinates (latitude, longitude, (altitude)) operations, where signaling is arranged from the serving eNodeB to the terminal, where the position fix (latitude, longitude, (altitude)) is computed in the terminal by fusion of the AoA value and the TA value.

### BRIEF DESCRIPTION OF THE DRAWINGS/FIGURES

The present disclosure is described with reference to the accompanying drawings. In the drawings, like reference numbers indicate identical or functionally similar elements. Additionally, the left most digit(s) of a reference number identifies the drawing in which the reference number first appears.
FIG. 1 illustrates a mixed communication network environment according to an exemplary embodiment of the present disclosure;
FIG. 2 illustrates a block diagram for estimating the location of an exemplary transmitting device and an exemplary receiving device that can be implemented within the mixed communication network environment according to an exemplary embodiment; and
FIG. 3 is a flowchart of an exemplary control flow according to an exemplary embodiment of the present disclosure.

The present disclosure will now be described with reference to the accompanying drawings. In the drawings, like reference numbers generally indicate identical, functionally similar, and/or structurally similar elements.

### DETAILED DESCRIPTION OF THE DISCLOSURE

### OVERVIEW

The invention made is disclosed in the attached independent claims. Additional features are described in the dependent claims.

A communication network of the present disclosure can determine one or more locations of one or more communication devices, such as one or more mobile communication devices and/or one or more base stations to provide some examples, within its geographic coverage area based upon one or more communication signals that are communicated within the communication network and/or between the communication network and another communication network. The one or more communication devices within the communication network can be implemented to utilize, for example, an implicit beamforming technique to receive the one or more communication signals over multiple signal pathways. The one or more communication devices can determine one or more characteristics of the one or more communication signals that are received over the multiple signal pathways to assist in determining the one or more locations. The one or more characteristics can represent a physical attribute of the one or more communication signals that can be measured, for example, one or more amplitudes, one or more phases, and/or one or more frequencies.

Thereafter, the one or more communication devices can determine one or more properties of the one or more communication signals. The one or more properties of the one or more communication signals can represent other attributes of the one or more communication signals that can be calculated using the one or more characteristics, such as Angle of Arrival (AoA) and/or Time of Flight (TOF) to provide some examples. These properties can be used to determine the one or more locations of the one or more communication devices. Once the one or more locations are determined using the one or more characteristics, the communication network can provide location-based services (LBS), or other services, to the one or more communication devices.

### MIXED COMMUNICATION ENVIRONMENT ACCORDING TO AN EXEMPLARY EMBODIMENT

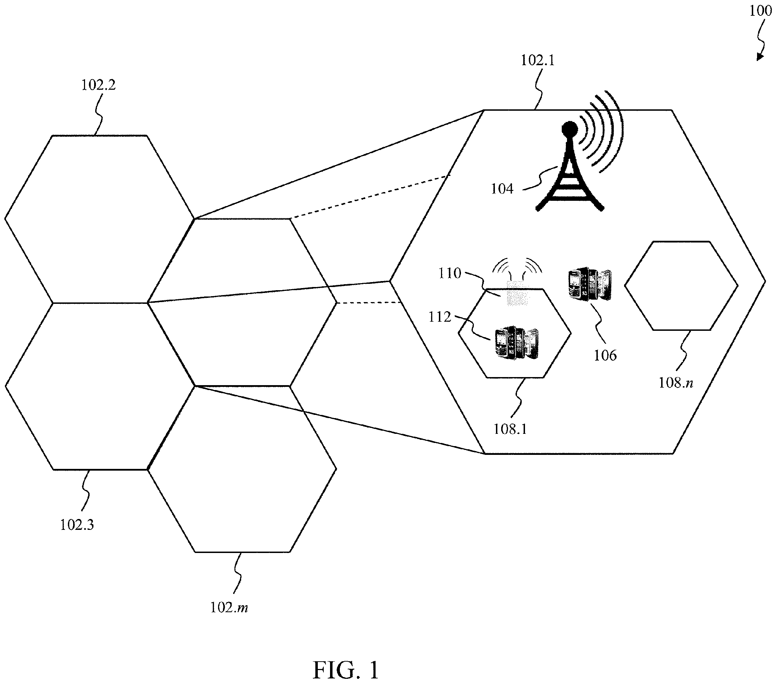

FIG. 1 illustrates a mixed communication network environment according to an exemplary embodiment of the present disclosure. A mixed communication network environment 100 provides wireless communication capabilities to mobile communication devices within its geographic coverage area that is distributed over cells 102.1 through 102.*m*. The cells 102.1 through 102.*m* can include one or more base stations to provide cellular communication capabilities to the mobile communication devices, one or more wireless access points to provide wireless networking capabilities to the mobile communication devices, or any combination of the one or more base stations and the one or more wireless access points. The one or more base stations and/or the one or more wireless access points can determine one or more locations of the mobile communication devices within their corresponding cells 102.1 through 102.*m*. Once the one or more locations are determined, the one or more base stations and/or the one or more wireless access points can provide location-based services (LBS), or other services, to their corresponding mobile communication devices. It should be noted that the number of cells, base stations, wireless access points, and/or mobile communication devices within the mixed communication network 100 is for illustrative purposes only. Those skilled in the relevant art(s) will recognize that a different number of cells, base stations, wireless access points, and/or mobile communication devices are possible without departing from the scope of the present disclosure. In the discussion to follow, operation of the cell 102.1 is to be described in further detail below. Those skilled in the relevant art(s) will recognize that the cells 102.2 through 102.*m* can operate in a substantially similar manner as the cell 102.1 without departing from the scope of the present disclosure.

As illustrated in FIG. 1, the cell 102.1 can include a base station 104 to provide the cellular communication capabilities to mobile communication devices 106. The base station 104 can communicate with the mobile communication devices 106 in accordance with one or more cellular communication standards or protocols. The one or more cellular communication standards or protocols can include various cellular communication standards such as a third Generation Partnership Project (3GPP) Long Term Evolution (LTE) communication standard, a fourth generation (4G) mobile communication standard, a third generation (3G) mobile communication standard to provide some examples.

As additionally, illustrated in FIG. 1, the cell 102.1 can include one or more wireless local area networks (WLANs) 108.1 through 108.n to provide the wireless networking capabilities to mobile communication devices. It should be noted that the number of WLANs within the cell 102.1 is for illustrative purposes only. Those skilled in the relevant art(s) will recognize that a different number of WLANs are possible without departing from the scope of the present disclosure. In the discussion to follow, operation of the WLAN 108.1 is to be described in further detail below. Those skilled in the relevant art(s) will recognize that the WLANs 108.2 through 108.n can operate in a substantially similar manner as the WLAN 108.1 without departing from the scope of the present disclosure. The WLAN 108.1 can include a wireless access point 110 and mobile communication devices 112. The wireless access point 110 can provide the wireless networking capabilities to the mobile communication devices 112 within its geographic coverage area. The wireless access point 110 can communicate with the mobile communication devices 112 in accordance with one or more wireless networking standards or protocols. The one or more wireless networking standards or protocols can include an Institute of Electrical and Electronics Engineers (IEEE) 802.11 communication standard or any other Wi-Fi wireless network communication standard or protocol to provide some examples. In an exemplary embodiment, the wireless access point 110 is located within a coverage area of the base station 104 that is characterized as being poor, for example, within a residential building, an office building, or a commercial building to provide some examples. In another exemplary embodiment, more than one wireless access point 110 can be located within the residential building, the office building, or the commercial building.

As further illustrated in FIG. 1, the mobile communication devices 106 can be associated with the base station 104 to communicate with the base station 104 in accordance with the one or more cellular communication standards or protocols. As the mobile communication devices 106 move, or roam, within the cell 102.1, the association of the mobile communication devices 106 can be changed from the base station 104 to another base station within the cells 102.2 through 102.*m* in a handover process. This handover process essentially re-associates the mobile communication devices 106 with this other base station to allow the mobile communication devices 106 to communicate with this other base station in accordance with the one or more cellular communication standards or protocols. Alternatively, or in addition to, the association of the mobile communication devices 106 can be changed from the base station 104 to the wireless access point 110 in a hand-in process. This hand-in process essentially re-associates the mobile communication devices 106 the wireless access point 110 to allow the mobile communication devices 106 to communicate with the wireless access point 110 in accordance with the one or more wireless networking standards or protocols.

Additionally, the mobile communication devices 112 can be associated with the wireless access point 110 to communicate with the wireless access point 110 in accordance with the one or more wireless networking standards or protocols. As the mobile communication devices 112 move, or roam, within a coverage area of the wireless access point 110, the association of the mobile communication devices 112 can be changed from the wireless access point 110 to another wireless access point within the WLANs 108.2 through 108.n in a handover process. This handover process essentially re-associates the mobile communication devices 112 with this other wireless access point to allow the mobile communication devices 102 to communicate with this other wireless access point in accordance with the one or more wireless networking standards or protocols. Alternatively, or in addition to, the association of the mobile communication devices 102 can be changed from the wireless access point 110 to the base station 104 in a hand-out process. This hand-out process essentially re-associates the mobile communication devices 112 to the base station 104 to allow the mobile communication devices 112 to communicate with the base station 104 in accordance with the one or more cellular communication standards or protocols.

As the mobile communication devices 106 and/or the mobile communication devices 112 roam, it can be beneficial for the mixed communication network environment 100 to determine the location of the mobile communication devices 106 and/or the mobile communication devices 112 within its geographic coverage area. This allows the mixed communication network environment 100 to provide location-based services (LBS), or other services, to the mobile communication devices 106 and/or the mobile communication devices 112.

The base station 104 and/or the wireless access point 110 can communicate their respective communication capabilities to the mobile communication devices 106 and/or the mobile communication devices 112. In an exemplary embodiment, this communication can be provide to the mobile communication devices 106 and/or the mobile communication devices 112 before the mobile communication devices 106 and/or the mobile communication devices 112 are associated and/or re-associated with the base station 104 and/or the wireless access point 110. These communication capabilities can include corresponding ones of the one or more cellular communication standards and/or the one or more wireless networking standards that are supported by the base station 104 and/or the wireless access point 110 and whether the base station 104 and/or the wireless access point 110 can support an implicit beamforming technique for communication.

When the base station 104 and/or the wireless access point 110 can support the implicit beamforming technique, the mobile communication devices 106 and/or the mobile communication devices 112 can send one or more requests for location determination to the base station 104 and/or the wireless access point 110 in accordance with the corresponding ones of the one or more cellular communication standards and/or the one or more wireless networking standards. In an exemplary embodiment, the one or more cellular communication standards and/or the one or more wireless networking standards outline certain communication signals, such as a RACH (Random Access Channel) preamble or a radio resource control (RRC) connection request message and/or a probe request, an authentication frame, or an association request to provide some examples, that are sent by the mobile communication devices 106 and/or the mobile communication devices 112 to establish communication with the base station 104 and/or the wireless access point 110. Alternatively, or in addition to, one or more non-standard-defined communication signals, such as a tone, a training field, a ping, a page, a roaming signal, a command and/or control signal to provide some examples, which need not defined by the one or more cellular communication standards and/or the one or more wireless networking standards, can also be communicated within the mixed communication network 100. In this exemplary embodiment, the one or more requests for location determination can be included within these one or more standard-defined communication signals and/or the one or more non-standard-defined communication signals.

The base station 104 and/or the wireless access point 110 can receive the one or more requests for location determination from the mobile communication devices 106 and/or the mobile communication devices 112. In an exemplary embodiment, the base station 104 and/or the wireless access point 110 can be implemented to utilize, for example, an implicit beamforming technique to receive the one or more requests for location determination. The implicit beamforming technique allows the base station 104 and/or the wireless access point 110 to receive the one or more requests over multiple signal pathways within the mixed communication network 100. The base station 104 and/or the wireless access point 110 can determine one or more characteristics, such as one or more amplitudes and/or one or more phases to provide some examples, of the one or more requests that are received over the multiple signal pathways. For example, the wireless access point 110 can determine a first phase and/or a first amplitude of a corresponding request from among the one or more requests for location determination as received by a first signal pathway and a second phase and/or a second amplitude of the corresponding request as received by a second signal pathway.

Thereafter, the base station 104 and/or the wireless access point 110 can determine one or more properties, such as one or more Angle of Arrivals (AoAs) of the one or more requests based upon the one or more characteristics to determine one or more locations of the mobile communication devices 106 and/or the mobile communication devices 112. It should be noted that the one or more AoAs can alternatively be described as being one or more Angle of Departures (AoD) that will be apparent to those skilled in the relevant art(s) without departing from the scope of the present disclosure. The AoA is typically characterized as being a coarse location estimate of the mobile communication devices 106 and/or the mobile communication devices 112 representing a direction, usually along a three-dimensional line, from the base station 104 and/or the wireless access point 110 to the mobile communication devices 106 and/or the mobile communication devices 112. The base station 104 and/or the wireless access point 110 can optionally communicate the one or more properties of the one or more requests for location determination and/or their own locations to the mobile communication devices 106 and/or the mobile communication devices 112. In an exemplary embodiment, the base station 104 and/or the wireless access point 110 can include a look-up table that assigns various characteristics to corresponding properties. In this exemplary embodiment, the base station 104 and/or the wireless access point 110 can access the look-up table to estimate the one or more properties.

Optionally, the base station 104 and/or the wireless access point 110 can communicate one or more responses, such as one or more acknowledgements (ACKs) to provide an example, sent in response to receiving the one or more requests for location determination to the mobile communication devices 106 and/or the mobile communication devices 112. Thereafter, the base station 104 and/or the wireless access point 110 can determine one or more properties, such as one or more one or more Time of Flights (TOFs) of the one or more responses based upon one or more characteristics, such as one or more Time of Departure (TODs) and/or one or more Time of Arrivals (TOAs) of the one or more responses and/or of the one or more requests for location determination to provide an example. The properties of the one or more requests for location determination and the one or more responses is typically characterized as being one or more fine location estimates of the mobile communication devices 106 and/or the mobile communication devices 112 whereby the properties determined by the base station 104 and/or the wireless access point 110 represents a three-dimensional line, from the base station 104 and/or the wireless access point 110 to the mobile communication devices 106 and/or the mobile communication devices 112 and the properties determined the mobile communication devices 106 and/or the mobile communication devices 112 represents radial points along the three-dimensional lines where the mobile communication devices 106 and/or the mobile communication devices 112 are estimated to be located. Once the locations of the mobile communication devices 106 and/or the mobile communication devices 112 are estimated, the base station 104 and/or the wireless access point 110 can provide location-based services (LBS), or other services, to the mobile communication devices 106 and/or the mobile communication devices 112.

Although FIG. 1 has been described as the mobile communication devices 106 and/or the mobile communication devices 112 determining their locations within the mixed communication network environment 100, those skilled in the relevant art(s) will recognize that the base station 104 and/or the wireless access point 110 can determine their locations within the mixed communication network environment 100 in a substantially similar manner that will be apparent to those skilled in the relevant art(s) without departing from the scope of the present disclosure. For example, the base station 104 and/or the wireless access point 110 can send one or more communication signals, such as one or more requests to provide an example, for location determination to other base stations 104, other wireless access points 110, and/or one or more of the mobile communication devices 106 and/or the mobile communication devices 112, Thereafter, in this example, the other base stations 104, the other wireless access points 110, and/or the one or more of the mobile communication devices 106 and/or the mobile communication devices 112 can provide the properties of the one or more requests for location determination to the base station 104 and/or the wireless access point 110 to allow the base station 104 and/or the wireless access point 110 one or more coarse location estimates of the base station 104 and/or the wireless access point 110 in a substantially similar manner as described above, Next, in this example, the base station 104 and/or the wireless access point 110 can determine one or more properties of one or more responses sent in response to the one or more requests for location determination to provide one or more fine location estimates of the base station 104 and/or the wireless access point 110 in a substantially similar manner as described above.

### EXEMPLARY MOBILE COMMUNICATION DEVICE LOCATION ESTIMATE

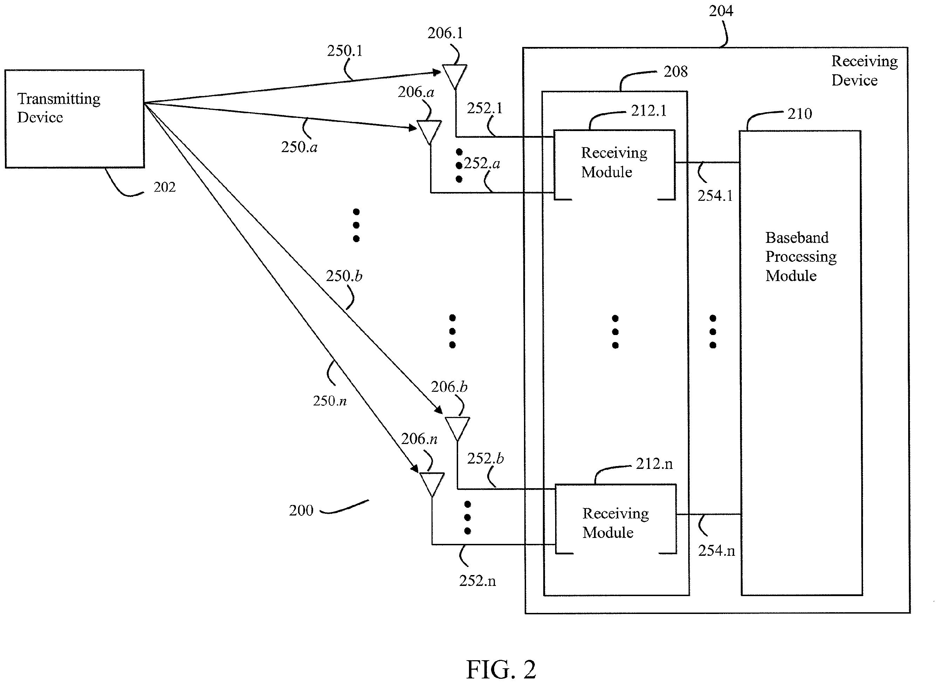

FIG. 2 illustrates a block diagram for estimating the location of an exemplary transmitting device and an exemplary receiving device that can be implemented within the mixed communication network environment according to an exemplary embodiment. A communication environment 200 provides wireless communication capabilities between a transmitting device 202 and a receiving device 204. The transmitting device 202 can represent an exemplary embodiment of one or more of the mobile communication devices 106 and/or the mobile communication devices 112 and the receiving device 204 can represent an exemplary embodiment of the base station 104 and/or the wireless access point 110. Alternatively, the transmitting device 202 can represent an exemplary embodiment of the base station 104 and/or the wireless access point 110 and the receiving device 204 can represent an exemplary embodiment of one or more of the mobile communication devices 106 and/or the mobile communication devices 112.

The receiving device 204 observes a communication signal having a request for location determination provided by the transmitting device 202 as the communication signal passes through a communication channel. As illustrated in FIG. 2, the receiving device 204 includes one or more antennas 206.1 through 206.*n* to observe the communication signal. In an exemplary embodiment, the one or more antennas 206.1 through 206.*n* can be separated into one or more groups of antennas. In this exemplary embodiment, a first group of antennas includes antennas 206.1 through 206.*a* and a second group of antennas includes antennas 206.*b* through 206.*n*. However, this exemplary embodiment is not limiting, those skilled in the relevant art(s) will recognize that the one or more groups of antennas can include any suitable number of the one or more antennas 206.1 through 206.*n*, such as one antenna from among the one or more antennas 206.1 through 206.*n* to provide an example, without departing from the scope of present disclosure.

As additionally illustrated in FIG. 2, each of the antennas 206.1 through 206.*n* observes the communication signal as it passes through the communication channel along a corresponding signal pathway 250.1 through 250.*n* to provide observed communication signals 252.1 through 252.*n*. For example, a first signal pathway 250.1 represents a first signal pathway that the communication signal traverses from the transmitting device 202 through the communication channel before being observed by the antenna 206.1. The signal pathways 250.1 through 250.*n* can have differing propagation characteristics such that the one or more characteristics of the communication signal can differ along each of the signal pathways 250.1 through 250.*n*. The difference in the one or more characteristics of the communication signal along each of the signal pathways 250.1 through 250.*n* can be used by the receiving device 204 to determine the location of the transmitting device 202.

As additionally illustrated in FIG. 2, the receiving device 204 includes a communication receiving module 208 to process the observed communication signals 252.1 through *252.n* to provide observed communication sequences 254.1 through 254.*n*. The communication receiving module 208 includes receiving modules 212.1 through 212.*n*, each of the receiving modules 212.1 through 212.*n* processes a corresponding one of the observed communication signals 252.1 through 252.*n* to provide a corresponding one of the observed communication sequences 254.1 through 254.*n*. In an exemplary embodiment, the receiving modules 212.1 through *212.n* process the observed communication signals 252.1 through *252.n* in accordance with the one or more communication standards or protocols. In this exemplary embodiment, the observed communication sequences 254.1 through 254.*n* represent digital representations of the observed communication signals 252.1 through *252.n* which have undergone processing in accordance with the one or more communication standards or protocols. This processing can include filtering, gain, noise, and/or phase compensation, equalization, error correction, analog to digital conversion to provide some examples. Additionally, the receiving modules 212.1 through *212.n* can determine one or more characteristics, such as amplitude and/or phase to provide some examples, of their corresponding communication sequences 254.1 through 254.*n*.

As further illustrated in FIG. 2, the receiving device 204 includes a baseband processing module 210 to process the observed communication sequences 254.1 through 254.*n* and the one or more characteristics. The baseband processing module 210 can receive the one or more characteristics as part of the observed communication sequences 254.1 through 254.*n*, referred to as a soft decision, or can receive the observed communication sequences 254.1 through 254.*n* separate from the one or more characteristics, referred to as a hard decision.

The baseband processing module 210 can analyze the observed communication sequences 254.1 through 254.*n* and/or the one or more characteristics to determine the one or more properties, such as Angle of Arrival (AoA) and/or Time of Flight (TOF) to provide some examples, of the observed communication sequences 254.1 through 254.*n* based upon the one or more signal characteristics. The baseband processing module 210, for example, may determine a first phase difference and/or a first time difference between the observed communication signal 252.1 received at the first receiving module 212.1 as compared to the observed communication signal 252.2 received at the second receiving module 212.2. Analogously, there may be a second phase difference and/or a second time difference between the observed communication signal 252.2 received at the second receiving module 212.2 and the observed communication signal 252.*n* received at the receiving module 212.*n*. Similarly, there may be a n^{th} phase difference and/or a n^{th} time difference between the observed communication signal 252.1 received at the first receiving module 212.1 and the observed communication signal received at the receiving module *212.n.*

In an exemplary embodiment, the baseband processing module 210 can calculate a beamforming matrix for the observed communication sequences 254.1 through 254.*n* and the one or more properties based upon the beamforming matrix based. For example, the baseband processing module 210 can calculate the beamforming matrix and can determine one or more differences between coefficients within the beamforming matrix based on beamforming calculations and operations upon the beamforming matrix to determine the one or more properties. The beamforming calculations and operations can include, for example, an implicit beamforming technique known in the art, for example, an IEEE 802.11 implicit beamforming technique.

In another exemplary embodiment, the baseband processing module 210 can access a look-up table corresponding to the one or more characteristics to determine the one or more properties. For example, the baseband processing module 210 can access a look-up table corresponding to the measured phases and/or amplitudes of the communication signal as received over the signal pathways 250.1 through 250.*n* and can provide the AoA from the look-up table based upon the measured phases and/or amplitudes.

The baseband processing module 210 can cause the communication receiving module 208 to communicate the one or more properties of the communication signal to the transmitting device 202. Thereafter, the transmitting device 202 can use the one or more properties of the communication signal to determine its coarse location estimate, usually along a three-dimensional line, from the receiving device 204 to the transmitting device 202. Additionally, the baseband processing module 210 can cause the communication receiving module 208 to communicate one or more responses, such as one or more acknowledgements (ACKs) to provide an example, to the communication signal to the transmitting device 202. The transmitting device 202 can use the one or more properties of the communication signal to the transmitting device 202 and the one or more properties of the one or more responses to the transmitting device 202 to determine its location within the communication environment 200.

### METHOD FOR LOCATING A MOBILE COMMUNICATION DEVICE

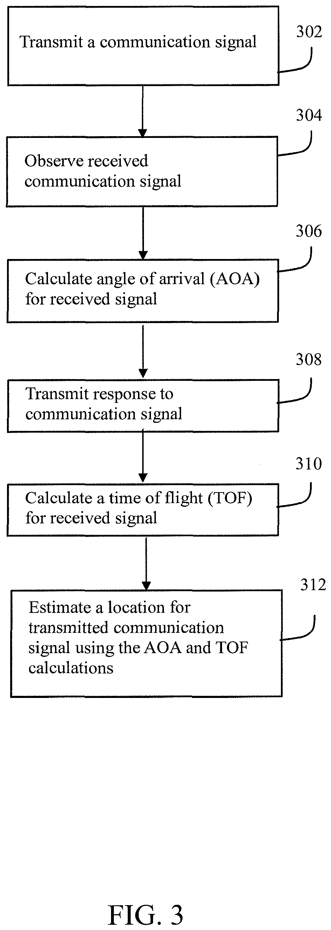

FIG. 3 is a flowchart of an exemplary control flow according to an exemplary embodiment of the present disclosure. The disclosure is not limited to this operational description. Rather, it will be apparent to persons skilled in the relevant art(s) from the teachings herein that other operational control flows are within the scope of the present disclosure. The following discussion describes the steps in FIG. 3.

At step 302, the operational control flow transmits a communication signal, such as request for location determination to provide an example. The request for location determination can be, or included within, the one or more standard-defined communication signals and/or the one or more non-standard-defined communication signals.

At step 304, the operational control flow observes the communication signal along multiple signal pathways as the communication signal passes through a communication channel. The operational control flow can implement an implicit beamforming technique to observe the communication signal as the communication signal passes through the communication channel.

At step 306, the operational control flow processes one or more observed communication signals from the communication signal to determine one or more properties, such as Angle of Arrival (AoA), of the received communication signal.

At step 308, the operational control flow transmits a response to the communication signal. The response to the communication signal can include the one or more properties.

At step 310, the operational control flow, observes the response as the response passes through the communication channel. The operational control flow processes the observed response to determine one or more properties, such as Time of Flight (ToF), of the received response.

At step 312, the operational control flow estimates a location by using the one or more properties of the communication signal and/or one or more properties of the response.

### CONCLUSION

The following Detailed Description referred to accompanying figures to illustrate exemplary embodiments consistent with the disclosure. References in the disclosure to "an exemplary embodiment" indicates that the exemplary embodiment described can include a particular feature, structure, or characteristic, but every exemplary embodiment may not necessarily include the particular feature, structure, or characteristic. Moreover, such phrases are not necessarily referring to the same exemplary embodiment. Further, any feature, structure, or characteristic described in connection with an exemplary embodiment can be included, independently or in any combination, with features, structures, or characteristics of other exemplary embodiments whether or not explicitly described.

The Detailed Description is not meant to limit the disclosure. Rather, the scope of the disclosure is defined only in accordance with the following claims and their equivalents. It is to be appreciated that the Detailed Description section, and not the Abstract section, is intended to be used to interpret the claims. The Abstract section can set forth one or more, but not all exemplary embodiments, of the disclosure, and thus, are not intended to limit the disclosure and the following claims and their equivalents in any way.

The exemplary embodiments described within the disclosure have been provided for illustrative purposes, and are not intend to be limiting. Other exemplary embodiments are possible, and modifications can be made to the exemplary embodiments while remaining within the scope of the disclosure. The disclosure has been described with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

Embodiments of the disclosure can be implemented in hardware, firmware, software, or any combination thereof. Embodiments of the disclosure can also be implemented as instructions stored on a machine-readable medium, which can be read and executed by one or more processors. A machine-readable medium can include any mechanism for storing or transmitting information in a form readable by a machine (e.g., a computing device). For example, a machine-readable medium can include non-transitory machine-readable mediums such as read only memory (ROM); random access memory (RAM); magnetic disk storage media; optical storage media; flash memory devices; and others. As another example, the machine-readable medium can include transitory machine-readable medium such as electrical, optical, acoustical, or other forms of propagated signals (e.g., carrier waves, infrared signals, digital signals, etc.). Further, firmware, software, routines, instructions can be described herein as performing certain actions. However, it should be appreciated that such descriptions are merely for convenience and that such actions in fact result from computing devices, processors, controllers, or other devices executing the firmware, software, routines, instructions, etc.

The Detailed Description of the exemplary embodiments fully revealed the general nature of the disclosure that others can, by applying knowledge of those skilled in relevant art(s), readily modify and/or adapt for various applications such exemplary embodiments, without undue experimentation, without departing from the scope of the disclosure. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

References in the disclosure to a "module" shall be understood to include at least one of software, firmware, and hardware (such as one or more circuits, microchips, or devices, or any combination thereof), and any combination thereof. In addition, it will be understood that each module can include one, or more than one, component within an actual device, and each component that forms a part of the described module can function either cooperatively or independently of any other component forming a part of the module. Conversely, multiple modules described herein can represent a single component within an actual device. Further, components within a module can be in a single device or distributed among multiple devices in a wired or wireless manner.

A communication network of the present disclosure can determine one or more locations of communication devices within its geographic coverage area based upon one or more communication signals that are communicated within the communication network and/or between the communication network and another communication network. The communication devices within the communication network can be implemented to utilize, for example, an implicit beamforming technique to receive the one or more communication signals over multiple signal pathways. The communication devices can determine one or more characteristics of these various communication signals that are received over the multiple signal pathways to assist in determining the one or more locations. Thereafter, the communication devices can determine one or more properties of the various communication signals based upon the one or more characteristics to determine the one or more locations.

## Claims

1. A wireless access point (110) in a wireless local area network (108.1), the wireless access point, comprising:
a plurality of receiving modules (212) configured to determine a plurality of characteristics of a communication signal that is provided by a mobile communication device (112) over different signal pathways from among a plurality of signal pathways; and
a processing module (210) configured to calculate a property of the communication signal, the property including an Angle of Arrival or a Time of Flight, based upon the plurality of characteristics, for determining one or more locations of the mobile communication device, wherein the wireless access point is configured to:
communicate to the mobile communication device, before the mobile communication device is associated with the wireless access point, that the wireless access point can support an implicit beamforming technique for communication; and
implement the implicit beamforming technique for receiving the communication signal over the different signal pathways.

2. The wireless access point of claim 1, wherein the wireless access point is configured to operate in accordance with an Institute of Electrical and Electronics Engineers (IEEE) 802.11 communication standard or protocol.

3. The wireless access point of claim 1, further comprising:
a plurality of antennas (206) configured to receive the communication signal over the different signal pathways before the mobile communication device associates with the wireless access point.

4. The wireless access point of claim 1, wherein the mobile communication device is configured to determine a second property of a second communication signal sent by the wireless access point in response to the communication signal.

5. The wireless access point of claim 4, wherein the second property represents a radial point along a three-dimensional line from the wireless access point to the mobile communication device.

6. The wireless access point of claim 4, wherein the second property comprises:
the Time of Flight between the mobile communication device and the wireless access point.

7. The wireless access point of claim 1, wherein the plurality of receiving modules is configured to determine the plurality of characteristics in accordance with the implicit beamforming technique.

8. The wireless access point of claim 1, wherein the communication signal comprises:
a request for location determination.

9. A method for locating a second communication device (112) within a wireless network, the method comprising:
communicating, by a communication device (110) to the second communication device, before the second communication device is associated with the communication device, that the communication device can support an implicit beamforming technique for communication;
implementing, by the communication device, the implicit beamforming technique for receiving a communication signal from the second communication device over a plurality of signal pathways;
receiving, by the communication device, the communication signal having a request for location determination that was transmitted by the second communication device over the plurality of signal pathways;
determining, by the communication device a plurality of characteristics of the communication signal based upon the plurality of received communication signals; and
calculating, by the communication device, a property of the communication signal, the property including an Angle of Arrival or a Time of Flight, based upon the plurality of characteristics, for determining one or more locations of the second communication device.

10. The method of claim 9, further comprising:
determining, by the second communication device, its location based upon the first property and a second property of a second communication signal provided by the communication device in response to the communication signal.

## Patentansprüche

1. Drahtloser Zugangspunkt (110) in einem drahtlosen lokalen Netzwerk (108.1), wobei der drahtlose Zugangspunkt aufweist:
eine Vielzahl von Empfangsmodulen (212), die dazu konfiguriert sind, eine Vielzahl von Kenndaten eines Kommunikationssignals zu bestimmen, das von einem mobilen Kommunikationsgerät (112) über verschiedene Signalpfade aus einer Vielzahl von Signalpfaden bereitgestellt wird; und
ein Verarbeitungsmodul (210), das dazu konfiguriert ist, eine Eigenschaft des Kommunikationssignals zu berechnen, wobei die Eigenschaft einen Einfallswinkel oder eine Laufzeit aufweist, basierend auf der Vielzahl von Kenndaten, um einen oder mehrere Standorte des mobilen Kommunikationsgeräts zu ermitteln, wobei der drahtlose Zugangspunkt konfiguriert ist zum:
Kommunizieren an das mobile Kommunikationsgerät, bevor das mobile Kommunikationsgerät mit dem drahtlosen Zugangspunkt verbunden wird, dass der drahtlose Zugangspunkt eine implizite Strahlformungstechnik zur Kommunikation unterstützen kann; und Implementieren der impliziten Strahlformungstechnik zum Empfangen des Kommunikationssignals über die verschiedenen Signalpfade.

2. Drahtloser Zugangspunkt nach Anspruch 1, wobei der drahtlose Zugangspunkt dazu konfiguriert ist, gemäß einem Institute of Electrical and Electronics Engineers (IEEE) 802.11 Kommunikationsstandard oderprotokoll zu arbeiten.

3. Drahtloser Zugangspunkt nach Anspruch 1, der des Weiteren aufweist:
eine Vielzahl von Antennen (206), die dazu konfiguriert sind, das Kommunikationssignal über die verschiedenen Signalpfade zu empfangen, bevor sich das mobile Kommunikationsgerät mit dem drahtlosen Zugangspunkt verbindet.

4. Drahtloser Zugangspunkt nach Anspruch 1, wobei das drahtlose Kommunikationsgerät dazu konfiguriert ist, eine zweite Eigenschaft eines zweiten Kommunikationssignals zu bestimmen, das von dem drahtlosen Zugangspunkt im Ansprechen auf das Kommunikationssignal gesendet wird.

5. Drahtloser Zugangspunkt nach Anspruch 4, wobei die zweite Eigenschaft einen radialen Punkt entlang einer dreidimensionalen Linie von dem drahtlosen Zugangspunkt zu dem mobilen Kommunikationsgerät repräsentiert.

6. Drahtloser Zugangspunkt nach Anspruch 4, wobei die zweite Eigenschaft aufweist:
die Laufzeit zwischen dem mobilen Kommunikationsgerät und dem drahtlosen Zugangspunkt.

7. Drahtloser Zugangspunkt nach Anspruch 1, wobei die Vielzahl von Empfangsmodulen dazu konfiguriert ist, die Vielzahl von Kenndaten gemäß der impliziten Strahlformungstechnik zu bestimmen.

8. Drahtloser Zugangspunkt nach Anspruch 1, wobei das Kommunikationssignal aufweist:
eine Anfrage zur Standortermittlung.

9. Verfahren zum Lokalisieren eines zweiten Kommunikationsgeräts (112) in einem drahtlosen Netzwerk, wobei das Verfahren umfasst:
Kommunizieren, durch ein Kommunikationsgerät (110) an das zweite Kommunikationsgerät, bevor das zweite Kommunikationsgerät mit dem Kommunikationsgerät verbunden wird, dass das Kommunikationsgerät eine implizite Strahlformungstechnik zur Kommunikation unterstützen kann;
Implementieren, durch das Kommunikationsgerät, der impliziten Strahlformungstechnik zum Empfangen eines Kommunikationssignals von dem zweiten Kommunikationsgerät über eine Vielzahl von Signalpfaden;
Empfangen, durch das Kommunikationsgerät, des Kommunikationssignals, das eine Anfrage zur Standortermittlung hat und von dem zweiten Kommunikationsgerät über die Vielzahl von Signalpfaden gesendet worden ist;
Bestimmen, durch das Kommunikationsgerät, einer Vielzahl von Kenndaten des Kommunikationssignals basierend auf der Vielzahl empfangener Kommunikationssignale; und
Berechnen, durch das Kommunikationsgerät, einer Eigenschaft des Kommunikationssignals, wobei die Eigenschaft einen Einfallswinkel oder eine Laufzeit aufweist, basierend auf der Vielzahl von Kenndaten, um einen oder mehrere Standorte des zweiten Kommunikationsgeräts zu ermitteln.

10. Verfahren nach Anspruch 9, das des Weiteren umfasst:
Ermitteln, durch das zweite Kommunikationsgerät, seines Standorts basierend auf der ersten Eigenschaft und einer zweiten Eigenschaft eines zweiten Kommunikationssignals, das von dem Kommunikationsgerät im Ansprechen auf das Kommunikationssignal bereitgestellt wird.

## Revendications

1. Point d'accès sans fil (110) dans un réseau local sans fil (108.1), le point d'accès sans fil comprenant :
une pluralité de modules de réception (212) conçus pour déterminer une pluralité de caractéristiques d'un signal de communication qui est prévu par un dispositif de communication mobile (112) sur différentes voies de signalisation parmi une pluralité de voies de signalisation ; et
un module de traitement (210) conçu pour calculer une propriété du signal de communication, la propriété comprenant un angle d'arrivée ou un temps de vol, sur la base de la pluralité de caractéristiques, pour déterminer une ou plusieurs localisations du dispositif de communication mobile, dans lequel
le point d'accès sans fil est conçu pour :
communiquer au dispositif de communication mobile, avant que le dispositif de communication mobile ne soit associé au point d'accès sans fil, que le point d'accès sans fil peut prendre en charge une technique de formation de faisceau implicite pour une communication ; et
mettre en oeuvre la technique de formation de faisceau implicite pour recevoir le signal de communication sur les différentes voies de signalisation.

2. Point d'accès sans fil selon la revendicaton 1, dans lequel le point d'accès sans fil est conçu pour fonctionner selon un standard ou un protocole de communication 802.11 de l'institut des ingénieurs électriciens et électroniciens (IEEE).

3. Point d'accès sans fil selon la revendicaton 1, comprenant en outre :
une pluralité d'antennes (206) conçues pour recevoir le signal de communication sur les différentes voies de signalisation avant que le dispositif communication mobile ne s'associe au point d'accès sans fil.

4. Point d'accès sans fil selon la revendicaton 1, dans lequel le dispositif de communication mobile est conçu pour déterminer une seconde propriété d'un second signal de communication envoyé par le point d'accès sans fil en réponse au signal de communication.

5. Point d'accès sans fil selon la revendicaton 4, dans lequel la seconde propriété représente un point radial le long d'une ligne tridimensionnelle à partir du point d'accès sans fil jusqu'au dispositif de communication mobile.

6. Point d'accès sans fil selon la revendicaton 4, dans lequel la seconde propriété comprend :
le temps de vol entre le dispositif de communication mobile et le point d'accès sans fil.

7. Point d'accès sans fil selon la revendicaton 1, dans lequel la pluralité de modules de réception est conçue pour déterminer la pluralité de caractéristiques en fonction de la technique de formation de faisceau implicite.

8. Point d'accès sans fil selon la revendicaton 1, dans lequel le signal de communication comprend :
une requête de détermination de localisation.

9. Procédé permettant de localiser un second dispositif de communication (112) dans un réseau sans fil, le procédé consistant à :
communiquer, grâce à un dispositif de communication (110) vers le second dispositif de communication, avant que le second dispositif de communication ne soit associé au dispositif de communication, que le dispositif de communication peut prendre en charge une technique de formation de faisceau implicite pour une communication ;
mettre en oeuvre, par le dispositif de communication, la technique de formation de faisceau implicite permettant de recevoir un signal de communication du second dispositif de communication sur une pluralité de voies de signalisation ;
recevoir, grâce au dispositif de communication, le signal de communication ayant une requête de détermination de localisation qui a été transmise par le second dispositif de communication sur la pluralité de voies de signalisation ;
déterminer, grâce au dispositif de communication, une pluralité de caractéristiques du signal de communication sur la base de la pluralité de signaux de communication reçus ; et
calculer, grâce au dispositif de communication, une propriété du signal de communication, la propriété comprenant un angle d'arrivée ou un temps de vol, sur la base de la pluralité de caractéristiques, pour déterminer une ou plusieurs localisations du second dispositif de communication.

10. Procédé selon la revendicaton 9, consistant en outre à :
déterminer, grâce au second dispositif de communication, sa localisation sur la base de la première propriété et d'une seconde propriété d'un second signal de communication prévu par le dispositif de communication en réponse au signal de communication.
